# EUROPÄISCHE PATENTSCHRIFT

(11) **EP 2 379 384 B1**
(45) Veröffentlichungstag und Bekanntmachung des Hinweises auf die Patenterteilung: **27.03.2013**
(21) Anmeldenummer: 10702596.7
(22) Anmeldetag: 18.01.2010
(51) Int. Cl.: B60T 10/02

(54) **FAHRZEUGKÜHLKREISLAUF MIT EINEM RETARDER ODER EINER HYDRODYNAMISCHEN KUPPLUNG**
VEHICLE COOLING CIRCUIT HAVING A RETARDER OR A HYDRODYNAMIC CLUTCH
CIRCUIT DE REFROIDISSEMENT POUR VÉHICULE À MOTEUR, PRÉSENTANT UN RETARDATEUR OU UN COUPLAGE HYDRODYNAMIQUE

(30) Priorität: 19.01.2009 DE 102009005504
(43) Veröffentlichungstag der Anmeldung: 26.10.2011
(73) Patentinhaber: Voith Patent GmbH, 89522 Heidenheim (DE)
(72) Erfinder: KERNCHEN, Reinhard, 74589 Satteldorf (DE); ADAMS, Werner, 74564 Crailsheim (DE)
(74) Vertreter: Dr. Weitzel & Partner
(86) Internationale Anmeldenummer: PCT/EP2010/000234
(87) Internationale Veröffentlichungsnummer: WO 2010/081728

(56) Entgegenhaltungen:
- DE-A1- 10 346 066
- FR-A1- 2 253 948
- US-A- 4 744 443

## Beschreibung

Die Erfindung betrifft einen Fahrzeugkühlkreislauf, insbesondere Motorkühlkreislauf eines Lkw, Personenkraftwagens, Schienenfahrzeugs oder sonstigen Kraftfahrzeugs, welcher einen hydrodynamischen Retarder zum hydrodynamischen Abbremsen oder eine hydrodynamische Kupplung zum hydrodynamischen Antreiben des Fahrzeugs, das heißt zur Traktion oder zum Antreiben eines Aggregates des Fahrzeuges aufweist.

Kühlkreisläufe, in denen ein hydrodynamischer Retarder angeordnet ist, sind bekannt. Das Dokument DE 103 46 066 A1 beschreibt einen Fahrzeugkühlkreislauf, umfassend eine Kühlmediumpumpe, mittels der ein Kühlmedium zum Kühlen einer Brennkraftmaschine umgewälzt wird, sowie einen hydrodynamischen Retarder, wobei das Arbeitsmedium des Retarders zugleich das Kühlmedium des Kühlkreislaufs ist. Hierbei stellt der Retarder gleichzeitig die Kühlmediumpumpe dar.

Das Dokument DE 44 08 349 C2 beschreibt eine ähnliche Anordnung, wobei der Retarder auch im Nichtbremsbetrieb mit Arbeitsmedium befüllt wird.

US 4 744 443 A beschreibt einen hydrodynamischen Retarder mit einem angetriebenen Primärschaufelrad sowie einem Sekundärschaufelrat, welcher ausschließlich während des Bremsbetriebes wahlweise festsetzbar oder entgegen der Drehrichtung des Primärschaufelrades antreibbar ist.

Obwohl die bekannten Fahrzeugkühlkreisläufe bereits geringe Leistungsverluste aufweisen, gibt es Raum für weitere Verbesserungen. Es hat sich herausgestellt, dass die beschriebenen Retarder mitunter einen schlechten Wirkungsgrad im Pumpbetrieb (Nichtbremsbetrieb) zeigen. Dies lag bisher daran, dass das Strömungsverhalten des Retarders im Nichtbremsbetrieb im Wesentlichen dem im Retarderbetrieb glich. So wirken sich Strömungsverluste, die im herkömmlichen Bremsbetrieb durchaus erwünscht sind und zu einer optimalen Verzögerung des Fahrzeugs beitragen, im Pumpbetrieb, also dann, wenn der Retarder nicht zum Bremsen benutzt wird, negativ auf den Wirkungsgrad aus.

Aufgabe der vorliegenden Erfindung ist es, einen Fahrzeugkühlkreislauf anzugeben, der die Nachteile des Standes der Technik vermeidet. Insbesondere soll ein hydrodynamischer Retarder bereitgestellt werden, der im Nichtbremsbetrieb einen hohen Wirkungsgrad als Pumpe aufweist und insbesondere neben einer herkömmlichen Rotationspumpe als Ergänzungspumpe im Kühlkreislauf eingesetzt werden kann.

Die erfindungsgemäße Aufgabe wird durch einen Kühlkreislauf gemäß den unabhängigen Ansprüchen gelöst. Die abhängigen Ansprüche stellen bevorzugte Ausführungsformen der Erfindung dar.

Ein erfindungsgemäßer Fahrzeugkühlkreislauf, beispielsweise Motorkühlkreislauf, weist ein im Kühlkreislauf mittels einer Kühlmediumpumpe umgewälztes Kühlmedium sowie einen mittels des Kühlmediums gekühlten Fahrzeugantriebsmotor und/oder ein sonstiges wärmeerzeugendes Aggregat auf. Erfindungsgemäß ist ein hydrodynamischer Retarder vorgesehen, umfassend ein angetriebenes Primärschaufelrad und ein Sekundärschaufelrad, die miteinander einen torusförmigen, wahlweise mit einem Arbeitsmedium befüllbaren und von diesem entleerbaren Arbeitsraum ausbilden, um Drehmoment hydrodynamisch vom Primärschaufelrad auf das Sekundärschaufelrad zu übertragen, wobei das Arbeitsmedium des hydrodynamischen Retarders zugleich das Kühlmedium des Kühlkreislaufes ist und der hydrodynamische Retarder zugleich als die Kühlmediumpumpe oder als eine zusätzlich vorgesehene Kühlmediumpumpe arbeitet und eine Pumpwirkung zum Umwälzen des Kühlmediums im Kühlkreislauf auf das Kühlmedium aufbringt. Erfindungsgemäß ist dem Sekundärschaufelrad eine Bremse oder ein gegenüber dem Antrieb des Primärschaufelrads gegenläufiger Antrieb derart zugeordnet, dass dieses wahlweise in einem ersten Betriebszustand - Bremsbetrieb - festsetzbar oder entgegen der Drehrichtung des Primärschaufelrads antreibbar ist, um das Primärschaufelrad hydrodynamisch abzubremsen, und in einem zweiten Betriebszustand - Pumpbetrieb - teilweise oder vollständig freigebbar ist, so dass es mit der Drehzahl des Primärschaufelrads oder mit einer vorgegebenen Drehzahldifferenz langsamer als das Primärschaufelrad gemeinsam mit dem Primärschaufelrad in dieselbe Richtung umläuft.

Durch die Maßnahme des Festsetzens oder des gegenläufigen Antreibens des Sekundärrades im Bremsbetrieb wird im Wesentlichen die Ausbildung einer Kreislaufströmung mit Meridiankomponente im Arbeitsraum erreicht. Das Festsetzen des Sekundärschaufelrades entspricht einem Schlupf von 100 %, wohingegen das gegenläufige Antreiben des Sekundärschaufelrades insbesondere mit der gleichen oder nur leicht verschiedenen Drehzahl wie die des Primärschaufelrads einem Schlupf von etwa 200 % entspricht. Dagegen bildet sich im Pumpbetrieb durch das gleichsinnige und insbesondere freie Umlaufen oder Mitschleppen des Sekundärschaufelrades keine entsprechende hydrodynamische Kreislaufströmung aus, welche das Primärrad abbremst. Das Primärrad kann somit ungebremst als Kühlmediumpumpe arbeiten.

Besonders vorteilhaft trägt das Primärschaufelrad auf einer dem Arbeitsraum abgewandten Seite eine Rückenbeschaufelung zum Beschleunigen und Fördern von Kühlmedium. Dabei können sich die Schaufeln der Rückenbeschaufelung über den gesamten Außenumfang des Primärschaufelrades erstrecken oder nur auf einem Teil - beispielsweise im Bereich der radialen Mitte - vorgesehen und insbesondere einteilig mit dem Primärschaufelrad ausgeführt sein.

Bevorzugt begrenzen einander benachbarte innerhalb des Arbeitsraumes positionierte Schaufeln des Primärschaufelrades einen Arbeitsschaufelraum und einander benachbarte Schaufeln der Rückenbeschaufelung einen Rückenschaufelraum, wobei Arbeitsschaufelraum und Rückenschaufelraum über Öffnungen im Primärschaufelrad in strömungsleitender Verbindung miteinander stehen. Dabei bilden die Öffnungen einen Arbeitsmediumeintritt und einen Arbeitsmediumaustritt aus, so dass Arbeitsmedium aus dem Arbeitsraum und somit aus dem Arbeitsschaufelraum oder einer Vielzahl von Arbeitsschaufelräumen durch den Arbeitsmediumaustritt ausströmt und über die Schaufeln der Rückenbeschaufelung und den Arbeitsmediumeintritt in den Arbeitsraum zurückströmt. Bevorzugt ist der Arbeitsmediumaustritt radial innen im Bereich der Vorderseite der Schaufel des Primärschaufelrads in Bezug auf die Drehrichtung des Primärschaufelrads gesehen im Primärschaufelrad eingebracht, wohingegen der Arbeitsmediumeintritt radial außen im Bereich der Rückseite der Schaufel des Primärschaufelrads in das Primärschaufelrad eingebracht ist. Durch diese Anordnung wird erreicht, dass Arbeitsmedium höheren Druckes, welches die Vorderseite der Schaufel (Druckseite) umströmt, radial innen aus dem Arbeitsraum durch den Arbeitsmediumaustritt herausströmt und von der Rückenbeschaufelung radial nach außen beschleunigt wird. Dort strömt es durch den Arbeitsmediumeintritt wieder in den Arbeitsraum ein, wobei der Druck auf der Rückseite der Schaufel des Primärschaufelrads geringer ist, als der auf der Vorderseite, so dass Arbeitsmedium in den Arbeitsraum "gesogen" wird. Hierdurch wird der Wirkungsgrad und somit die Pumpwirkung des Retarders deutlich verbessert.

Vorzugsweise ist eine weitere Kühlmediumpumpe im Fahrzeugkühlkreislauf vorgesehen.

Gemäß einer alternativen Ausführungsform der Erfindung umfasst ein Fahrzeugkühlkreislauf, wie beispielsweise Motorkühlkreislauf ein im Kreislauf mittels einer Kühlmediumpumpe umgewälztes Kühlmedium, sowie einen mittels des Kühlmediums gekühlten Fahrzeugantriebsmotor und/oder ein sonstiges wärmeerzeugendes Aggregat. Ferner ist eine hydrodynamische Kupplung vorgesehen, umfassend ein angetriebenes Primärschaufelrad und ein Sekundärschaufelrad, die miteinander einen torusförmigen, wahlweise mit einem Arbeitsmedium befüllbaren und von diesem entleerbaren Arbeitsraum ausbilden, um Drehmoment hydrodynamisch vom Primärschaufelrad auf das Sekundärschaufelrad zu übertragen, wobei das Arbeitsmedium der hydrodynamischen Kupplung zugleich das Kühlmedium des Kühlkreislaufs ist, und das Sekundärschaufelrad der hydrodynamischen Kupplung drehfest mit der Kühlmediumpumpe verbunden ist. Erfindungsgemäß ist dem Sekundärschaufelrad eine Bremse oder ein gegenüber dem Antrieb des Primärschaufelrads gegenläufiger Antrieb derart zugeordnet, dass dieses wahlweise in einem ersten Betriebszustand - Bremsbetrieb - festsetzbar oder entgegen der Drehrichtung des Primärschaufelrads antreibbar ist, um das Primärschaufelrad hydrodynamisch abzubremsen und in einem zweiten Betriebszustand - Pumpbetrieb - teilweise oder vollständig freigebbar ist, so dass es annährend mit der Drehzahl des Primärschaufelrades oder mit einer vorgegebenen Drehzahldifferenz langsamer als das Primärschaufelrad gemeinsam mit dem Primärschaufelrad in dieselbe Richtung umläuft.

Die Erfindung soll nun anhand von Ausführungsbeispielen erläutert werden.

Es zeigen:
- Figur 1: eine schematische Darstellung eines erfindungsgemäßen Fahrzeugkühlkreislaufs.
- Figur 2: eine erste Ausführungsform eines erfindungsgemäßen Retarders.
- Figur 3: eine weitere Ausführungsform eines erfindungsgemäßen Retarders.
- Figuren 4a, 4b: eine weitere Ausführungsform unter Weiterbildung der Ausführung gemäß der Figur 2.
- Figur 5: eine Abwicklung eines Bereiches des Primärschaufelrads eines erfindungsgemäßen Retarders gemäß Figur 4.
- Figur 5a: eine Detailansicht in Blickrichtung A aus Figur 5.
- Figur 6: eine weitere Ausführungsform eines erfindungsgemäßen Retarders.
- Figur 7: ein Ersatzschaltbild eines erfindungsgemäßen Retarders.
- Figur 8: ein Volumenstrom-Druck-Diagramm eines erfindungsgemäßen Retarders im Pumpbetrieb.
- Figur 9: eine schematische Darstellung einer weiteren Ausführungsform eines erfindungsgemäßen Fahrzeugkühlkreislaufs.

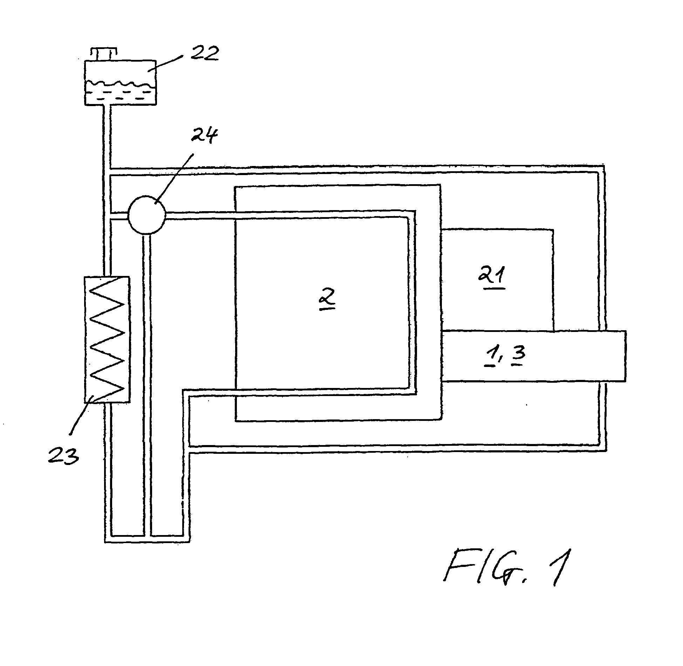

In Figur 1 ist eine schematische Darstellung eines erfindungsgemäßen Fahrzeugkühlkreislaufs dargestellt. In Strömungsrichtung des Kühlmediums gesehen sind ein Fahrzeugantriebsmotor 2, ein Thermostat 24 und ein Wärmetauscher 23 hintereinander geschaltet. Weiterhin ist ein Ausgleichsbehälter für Arbeitsmedium 22 vorgesehen. Im Kühlkreislauf ist im vorliegenden Falle ein hydrodynamischer Retarder 3 parallel zum Fahrzeugantriebsmotor 2 geschaltet, dessen Arbeitsmedium zugleich das Kühlmedium ist. Das Kühlmedium kann Wasser, Öl oder ein Wassergemisch sein. Hier ist der hydrodynamische Retarder 3 als Primärretarder ausgeführt, das heißt, dass dieser im Bremsbetrieb unter Umgehung eines Getriebes 21 oder angekoppelt auf der Primärseite des Getriebes 21 insbesondere direkt die Antriebs- oder Kurbelwelle des Fahrzeugantriebsmotors 2, welcher beispielsweise als Dieselmotor ausgeführt sein kann, verzögert. Auch wäre eine Ausführung als Sekundärretarder denkbar, wobei dieser dann zum Beispiel in Triebverbindung mit der Ausgangsseite des Getriebes 21, insbesondere einer Nebenabtriebswelle des Getriebes 21 oder einer Gelenkwelle hinter dem Getriebe 21 in Triebverbindung stehen würde.

Der Retarder 3 arbeitet im Nichtbremsbetrieb und insbesondere auch im Bremsbetrieb als Kühlmediumpumpe 1. Dieser kann somit alleine zur Umwälzung des Kühlmediums herangezogen werden. Alternativ hierzu kann eine zusätzliche Kühlmediumpumpe (nicht gezeigt) vorgesehen sein, so dass der Retarder 3 dann als Ergänzungs- oder Unterstützungspumpe arbeitet.

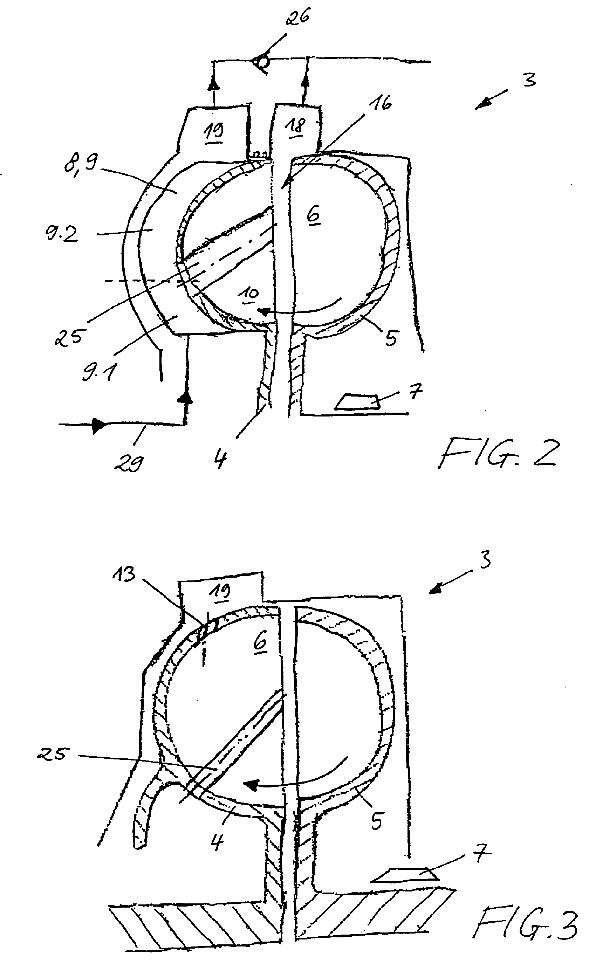

Figur 2 zeigt eine besonders bevorzugte Ausgestaltung des hydrodynamischen Retarders 3 gemäß einer ersten Ausführungsform. Dieser umfasst ein Primärschaufelrad 4 und ein Sekundärschaufelrad 5, welche einen torusförmigen, insbesondere von außen mit Arbeitsmedium befüll- und entleerbaren Arbeitsraum 6 ausbilden. Dabei erfolgt hier die Befüllung des Arbeitsraums 6 sowohl im Pumpbetrieb als auch im Bremsbetrieb über eine Zuführleitung 29 und einen im Primärschaufelrad 4 eingebrachten Arbeitsmediumzulauf 25, welcher mit der Zuführleitung 29 arbeitsmediumleitend verbunden ist. Hier ist der Arbeitsmediumzulauf 25 vorliegend als schräge Bohrung, das heißt im Winkel zur Längsachse des Retarders ausgeführt. Beispielsweise kann der Arbeitsmediumzulauf 25 in einer Schaufel 10 oder einer Vielzahl von Schaufeln 10 des Primärschaufelrades 4 eingebracht sein. Das Primärschaufelrad 4 und das Sekundärschaufelrad 5 bilden mit ihren einander zugewandten Seiten einen Trennspalt 16 aus, welcher mit einem Arbeitsmediumablauf 18 zum Abführen von Arbeitsmedium aus dem Arbeitsraum 6, kommuniziert. Hier ist der Arbeitsmediumablauf 18 radial außen angeordnet und umschließt den Trennspalt 16.

Wie aus Figur 2 ersichtlich ist, trägt das Primärschaufelrad 4 auf dessen dem Arbeitsraum 6 abgewandten Seite eine Rückenbeschaufelung 8, umfassend eine Vielzahl von Schaufeln 9. Diese dienen dazu, den Fördervolumenstrom durch den Retarder insbesondere im Pumpbetrieb, das heißt während eines Betriebszustands, in dem der Retarder 3 nicht zum hydrodynamischen Bremsen durch Übertragen von Drehmoment vom Primärschaufelrad 4 auf das Sekundärschaufelrad 5 benutzt wird, zu erhöhen. Dazu wird unabhängig vom Betriebszustand des Retarders Arbeitsmedium, das über die Zuführleitung 29 strömt, vom radial inneren Teil 9.1 der Schaufeln 9 erfasst und radial nach außen beschleunigt. Hierzu kann das Primärschaufelrad 4 über eine nicht gezeigte Antriebswelle permanent in Triebverbindung mit dem Fahrzeugantriebsmotor stehen oder in eine solche bringbar sein. Das Arbeitsmedium verlässt sodann die Schaufeln 9 im radial äußersten Bereich 9.2 der Rückenbeschaufelung 8 und strömt beispielsweise in einen Ringkanal oder Spiralkanal 19, welcher hier radial außen am Primärschaufelrad 4 angeordnet ist.

Vorliegend sind der Ringkanal oder der Spiralkanal 19 und der Arbeitsmediumablauf 18 im Bereich des Trennspalts 16 gegeneinander abgedichtet, so dass Arbeitsmedium nicht aus dem Trennspalt 16 in den Ringkanal/Spiralkanal 19 übertreten kann. Hier sind jedoch der Arbeitsmediumablauf 18 sowie der Spiralkanal 19 radial weiter außen arbeitsmediumleitend miteinander verbunden und insbesondere parallel geschaltet. In der strömungsleitenden Verbindung kann ein Rückschlagventil 26, welches den Rückfluss von Arbeitsmedium in den Spiralkanal 19 verhindert, vorgesehen sein.

Beispielweise kann dem Sekundärschaufelrad 5 eine Bremse 7 zugeordnet sein, welche es ermöglicht, das Sekundärschaufelrad insbesondere im Bremsbetrieb des Retarders 3 vollständig festzusetzen und dieses im Pumpbetrieb teilweise oder vollständig freizugeben. Dabei kann der Bremse 7 eine nicht gezeigte Steuervorrichtung zugeordnet sein, mittels welcher das Bremsmoment mehr oder minder eingestellt werden kann. Zusätzlich oder alternativ zur Bremse 7 kann eine nicht gezeigte Antriebsvorrichtung vorgesehen sein, welche das Sekundärschaufelrad 5 im Bremsbetrieb des Retarders gegenläufig zum Primärschaufelrad 4 antreibt, wobei dann ein Schlupf von 200 % erzielbar ist. Durch das gegenläufige Antreiben oder Festsetzen des Primärschaufelrades 5 bildet sich im Arbeitsraum 6 eine Kreislaufströmung aus, welche das Primärschaufelrad 4 hydrodynamisch verzögert. Gleichzeitig fördert die Rückenbeschaufelung 8 Kühlmedium, wobei die Förderleistung von der Drehzahl des Primärschaufelrades 4 abhängt. Im zweiten Betriebszustand, dem Pumpbetrieb, kann das Sekundärschaufelrad 6 dann derart freigegeben oder angetrieben werden, dass es gemeinsam mit dem Primärschaufelrad 4 in dieselbe Richtung und insbesondere mit derselben Drehzahl umläuft. Durch das gleichsinnige Antreiben oder das freie Mitschleppen des Sekundärschaufelrades 5 wird keine ausgeprägte Kreislaufströmung im Arbeitsraum 6 ausgebildet. Die beiden Schaufelräder 4, 5 wirken jetzt ausschließlich als Pumpe. Durch die Parallelschaltung des Spiralkanals 19 und des Arbeitsmediumablaufs 18 wird die Förderleistung des Retarders 3 vergrößert.

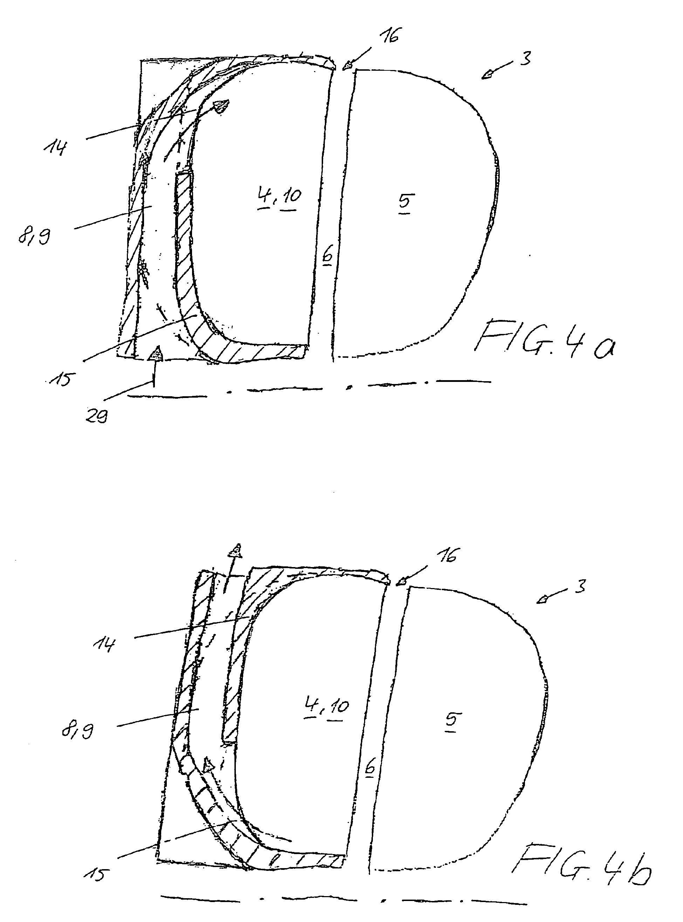

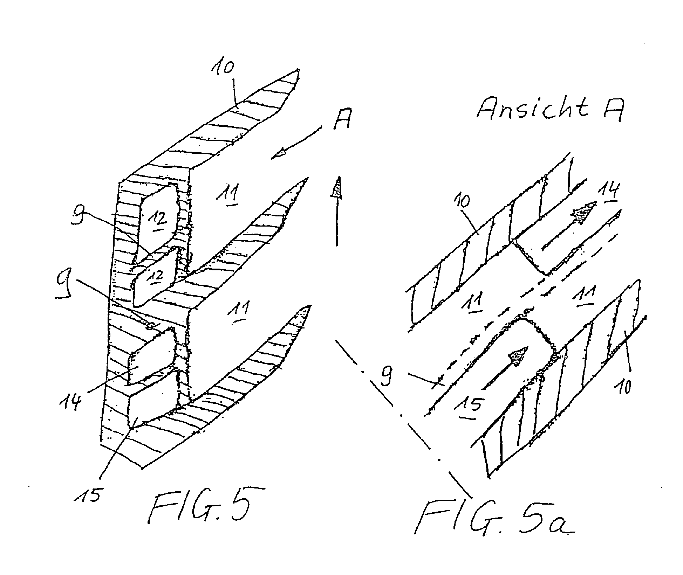

Die Figuren 4a, 4b, 5 und 5a zeigen eine besonders vorteilhafte Ausführungsform gemäß einer Weiterbildung der in der Figur 2 dargestellten Ausführung. Dabei sind die gleichen Bauteile mit denselben Bezugszeichen wie in den vorigen Figuren bezeichnet. Wie aus Figur 4a und 4b ersichtlich ist, weist das Primärschaufelrad 4 in einem Axialschnitt durch den Retarder gesehen, im radial inneren Bereich eine im Wesentlichen in Tangentialrichtung des äußeren Umfangs des Arbeitsraumes 6 verlaufende Öffnung auf, welche einen Arbeitsmediumaustritt 15 darstellt. Ebenso bildet das Primärschaufelrad 4 im radial äußeren Bereich eine derartige Öffnung aus, welche als Arbeitsmediumeintritt 14 dient. Die Figur 4a zeigt dabei einen Schnitt, der in Umfangsrichtung gegenüber dem Schnitt der Figur 4b versetzt angeordnet ist, und zwar um einen Rückenschaufelraum 12, der später mit Bezug auf die Figur 5 noch erläutert wird.

Weiter ist eine Rückenbeschaufelung 8, umfassend eine Vielzahl von Schaufeln 9 des Primärschaufelrades 4 dargestellt. Dabei kann Arbeitsmedium aus dem Kühlkreislauf über die Zuführleitung 29 den Schaufeln 9 zugeführt werden, von wo es, wie bereits beschrieben, aufgrund der Drehung des Primärschaufelrades 4 radial nach außen beschleunigt wird. Hierbei tritt abhängig vom Betriebszustand des hydrodynamischen Retarders 3 ein Teilstrom des Arbeitsmediums über den Arbeitsmediumeintritt 14 in den Arbeitsraum 6 und insbesondere in einen entsprechenden von zwei einander benachbarten Schaufeln 10 ausgebildeten Arbeitsschaufelraum 11 (siehe Figuren 5 und 5a) ein. Das Arbeitsmedium der Kreislaufströmung tritt im Bereich des Trennspalts 16 radial außen in das Sekundärschaufelrad 5 und von dort radial innen wieder in das Primärschaufelrad 4 ein, von wo es durch den Arbeitsmediumaustritt 15 den Arbeitsraum 6 wieder verlässt. Der übrige Teilstrom des Arbeitsmediums strömt durch die Rückenbeschaufelung 8 ohne den Arbeitsraum 6 radial nach außen zu durchströmen und wird zum Beispiel in den Ringkanal/Spiralkanal 19 von Figur 2 abgeführt.

Die Figur 5 zeigt eine Abwicklung des Primärschaufelrades 4 aus der Figur 4, beziehungsweise eine Draufsicht in Radialrichtung von außen nach innen gesehen. Dabei sind die von den Schaufeln 10 des Primärschaufelrades 4 begrenzten Arbeitsschaufelräume 11 sowie die von den Schaufeln 9 der Rückenbeschaufelung 8 begrenzten Rückenschaufelräume 12 ersichtlich. Im vorliegenden Fall sind Schaufeln 9 zwischen den Schaufeln 10 des Primärschaufelrades 4 und Schaufeln 9 im Bereich des Schaufelfußes der Schaufeln 10 des Primärschaufelrades 4 angeordnet. Somit sind doppelt so viele Schaufeln 9 wie Schaufeln 10 vorgesehen. Die Schaufeln 9 können parallel beziehungsweise fluchtend zu den Schaufeln 10 angeordnet sein.

Der Arbeitsmediumaustritt 15 ist hierbei im Bereich der Vorderseite der Schaufel 10 angeordnet - im Bezug auf die Drehrichtung (siehe den Pfeil) - wohingegen der Arbeitsmediumeintritt 14 im Bereich der Rückseite 10 der Schaufel 10 des Primärschaufelrads angeordnet ist. Die Figur 5a verdeutlicht gemäß der Ansicht A von Figur 5 die radial äußere Anordnung des Arbeitsmediumeintritts 14 und die radial innere Anordnung des Arbeitsmediumaustritts 15 in Bezug auf die gezeigte Längsachse (Drehachse) des hydrodynamischen Retarders 3.

In Figur 3 ist eine weitere Ausführungsform eines erfindungsgemäßen hydrodynamischen Retarders 3 gezeigt. Dabei wird auf eine Rückenbeschaufelung, wie in den vorigen Figuren gezeigt, verzichtet. Stattdessen wird lediglich die Pumpwirkung der Beschaufelung der Primär- 4 und Sekundärschaufelräder 5 ausgenutzt. Hierzu wird im Pump- sowie im Bremsbetrieb dem Arbeitsraum 6 Arbeitsmedium über den Arbeitsmediumzulauf 25 zugeführt, wodurch sich eine Kreislaufströmung im Arbeitsraum 6 ausbildet. Zum Abführen des Arbeitsmediums im Pumpbetrieb umfasst das Primärschaufelrad 4 im radial äußeren Bereich Öffnungen 13, durch welche das Arbeitsmedium der Kreislaufströmung im Wesentlichen in Radialrichtung aus dem Arbeitsraum 6 tangential zur Kreislaufströmung austritt und abgeführt wird. Das abgeführte Arbeitsmedium kann, wie bereits beschrieben, in den Ringkanal/Spiralkanal 19 strömen. Beispielsweise können Ventile vorgesehen sein, mittels denen der Strömungsquerschnitt der Öffnungen 13 variiert werden kann, derart, dass zum Beispiel im Bremsbetrieb des hydrodynamischen Retarders 3 die Öffnungen 13 insbesondere vollständig versperrt sind, so dass Arbeitsmedium nicht durch diese hindurchtreten kann, wohingegen die Öffnungen 13 im Nichtbremsbetrieb teilweise oder vollständig freigegeben sind. Weiterhin ist eine Bremse 7 oder ein Antrieb (nicht gezeigt) zum Festsetzen oder Antreiben des Sekundärschaufelrads 5 vorgesehen.

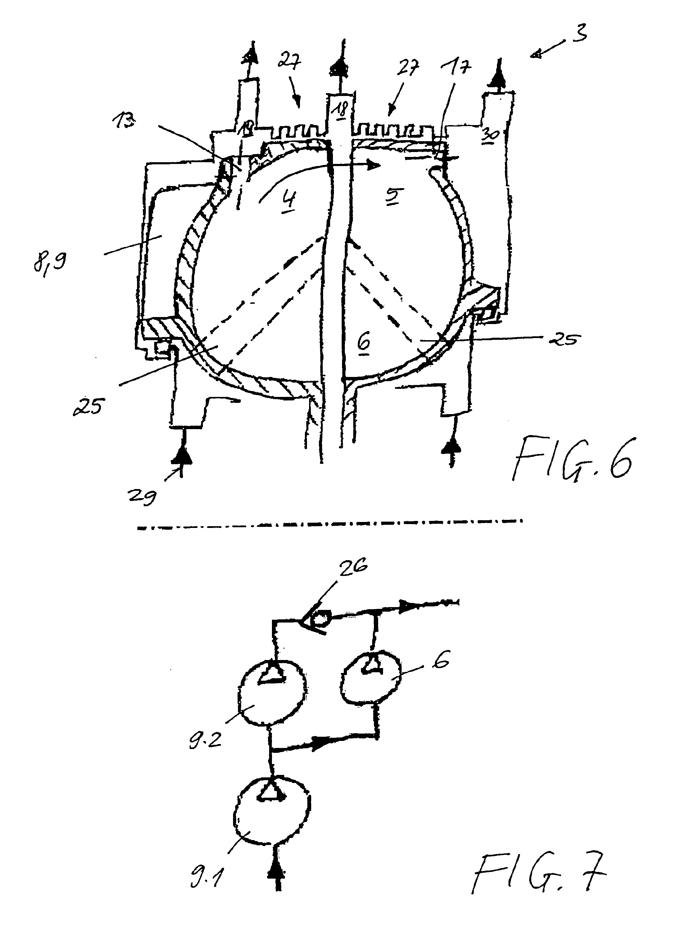

Figur 6 zeigt eine weitere Ausführungsform eines erfindungsgemäßen Retarders 3 mit einer Kombination der Merkmale der vorangegangenen Ausführungsformen. Dabei sind auch hier dieselben Merkmale mit den selben Bezugszeichen bezeichnet. Wie zu sehen, sind neben den Öffnungen 13 auch Öffnungen 17 im Sekundärschaufelrad 5 vorgesehen, welche im Wesentlichen tangential zur Kreislaufströmung im Arbeitsraum 6 eingebracht sind und im Wesentlichen in Axialrichtung verlaufen. Diese dienen ebenfalls dem Abführen von Arbeitsmedium aus dem Arbeitsraum 6, insbesondere im Pumpbetrieb des Retarders. Auch hier können den Öffnungen 13 die oben beschriebenen Ventile zur Einstellung eines Strömungsquerschnitts zugeordnet sein. Dabei münden die Öffnungen 17 in einem weiteren Arbeitsmediumablauf 30. Die Arbeitsmediumabläufe 18, 30 und der Ringkanal beziehungsweise Spiralkanal 19 können dabei im Bereich des radial äußeren Umfangs der beiden Schaufelräder 4, 5 mittels Spaltdichtungen 27 voneinander gegen den Übertritt von Arbeitsmedium getrennt sein. Weiterhin können die besagten Arbeitsmediumabläufe 18, 30 sowie der Ringkanal/Spiralkanal 19 über Leitungen miteinander strömungsleitend verbunden sein und insbesondere parallel geschaltet sein.

Die Figur 7 zeigt ein Ersatzschaubild der Anordnung gemäß der Figur 2. Dabei bezeichnen die Bezugszeichen 6, 9.1 und 9.2 symbolhaft die Pumpwirkung der einzelnen Komponenten. Dabei ist der die Pumpwirkung aufweisende Arbeitsraum 6 vorliegend zu dem die Pumpwirkung aufweisenden oberen Bereich 9.2 der Schaufel 9 parallelgeschaltet. Diesen in Reihe vorgeschaltet ist der die Pumpwirkung aufweisende untere Bereich 9.1 der Schaufel 9. Auch hier ist wiederum ein Rückschlagventil 26 vorgesehen.

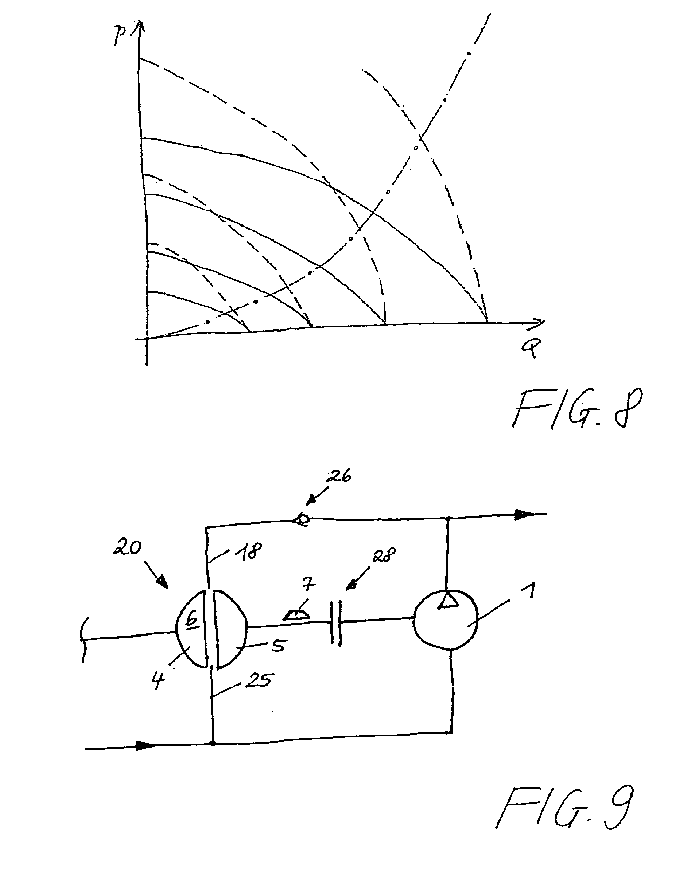

Die Figur 8 zeigt ein Kennlinienfeld eines erfindungsgemäßen hydrodynamischen Retarders. Dabei ist der Druck des Arbeitsmediums gegenüber dem Volumenstrom im Pumpbetrieb aufgezeichnet. Vorliegend zeigen die ausgezogenen Linien verschiedene Kennlinien bei unterschiedlichen Drehzahlen des Primärschaufelrades des hydrodynamischen Retarders, wobei das Sekundärschaufelrad vom Primärschaufelrad mitgeschleppt wird. Die gestrichelten Linien beschreiben hingegen Kennlinien die den entsprechenden Drehzahlen des Primärschaufelrades des Retarders bei mitgeschleppten Sekundärschaufelrad zugeordnet sind, wobei zum Bespiel das Sekundärschaufelrad durch Aufbringen eines Bremsmoments wenigstens teilweise verzögert wird, wobei ein vollständiges Festsetzen des Sekundärschaufelrades für längere Zeit vermieden wird. Dabei kann das Bremsmoment zeitlich getaktet aufgebracht oder von einem Minimalbremsmoment stufenweise oder stufenlos auf ein Maximalbremsmoment erhöht werden. Ein solches Bremsmoment kann dabei von einer elektro-, elektromagnetischen oder dauermagnetischen Bremsen aufgebracht werden. Die strichpunktierte Kennlinie beschreibt hierbei den Strömungswiderstand des gesamten Kühlkreislaufs.

Hieraus ist erkennbar, dass das Verhältnis des Fördervolumenstromes Q des Retarders im Bremsbetrieb zu dem im Pumpbetrieb derart gewählt, dass das Verhältnis mindestens 1,5 beträgt.

Die Figur 9 zeigt eine alternative Ausführungsform eines erfindungsgemäßen Kühlkreislaufs, wobei die Merkmale der beschriebenen Ausführungsformen miteinander kombiniert werden können. Dabei ist alternativ zum Retarder eine hydrodynamische Kupplung 20 vorgesehen, welche ebenfalls ein Primärschaufelrad 4 und ein Sekundärschaufelrad 5 aufweist, welche einen torusförmigen mit Arbeitsmedium befüll- und entleerbaren Arbeitsraum ausbilden. Dabei erfolgt die Befüllung über den Arbeitsmediumzulauf 25 und die Entleerung über den Arbeitsmediumablauf 18. Vorliegend ist die hydrodynamische Kupplung 20 parallel zur Kühlmediumpumpe 1 im Kühlkreislauf angeordnet. Dabei steht die hydrodynamische Kupplung 20 in Triebverbindung mit der Kühlmediumpumpe 1 oder ist in eine solche bringbar, beispielsweise mittels einer Kupplung 28. In der Triebverbindung kann eine Bremse 7 vorgesehen sein, welche dem Sekundärschaufelrad 5 oder einem mit dem Sekundärschaufelrad 5 drehfest ausgeführten Kupplungsteil der Kupplung 28 zugeordnet ist. Mittels der Bremse 7 kann das Sekundärschaufelrad in einem Bremsbetrieb festgesetzt und in einem Pumpbetrieb teilweise oder vollständig freigegeben werden, so dass die Funktionsweise dem erfindungsgemäßen hydrodynamischen Retarder gleicht. Vorzugsweise ist die Kupplung 20 eine schaltbare Kupplung, wobei im Bremsbetrieb die Kupplung 20 geöffnet ist, so dass die Triebverbindung zwischen hydrodynamischer Kupplung 20 und Kühlmediumpumpe 1 unterbrochen ist, wobei gleichzeitig die Bremse 7 geschlossen ist, so dass das Sekundärschaufeldrad 5 festgesetzt ist und die hydrodynamische Kupplung 20 als hydrodynamischer Retarder arbeitet. Im Pumpbetrieb ist die Kupplung 28 dagegen geschlossen und die Bremse 7 gelöst, so dass abhängig vom Füllungsgrad des Arbeitsraums 6 Antriebsleistung vom Primärschaufelrad 4 hydrodynamisch auf das Sekundärschaufelrad 5 übertragen wird, um somit die Kühlmediumpumpe 1 anzutreiben. Die Kupplung 28 kann beispielsweise auch als richtungsgeschaltete Kupplung ausgeführt sein, welche in einer ersten Drehrichtung eine Drehmomentübertragung zulässt und diese in einer entgegengesetzten Drehrichtung unterbindet.

### Bezugszeichenliste

- 1: Kühlmediumpumpe
- 2: Fahrzeugantriebsmotor
- 3: hydrodynamischer Retarder
- 4: Primärschaufelrad
- 5: Sekundärschaufelrad
- 6: Arbeitsraum
- 7: Bremse
- 8: Rückenbeschaufelung
- 9: Schaufel
- 9.1: unterer Schaufelbereich
- 9.2: oberer Schaufelbereich
- 10: Schaufel
- 11: Arbeitsschaufelraum
- 12: Rückenschaufelraum
- 13: Öffnungen
- 14: Arbeitsmediumeintritt
- 15: Arbeitsmediumaustritt
- 16: Trennspalt
- 17: Öffnungen
- 18: Arbeitsmediumablauf
- 19: Spiralkanal
- 20: hydrodynamische Kupplung
- 21: Getriebe
- 22: Ausgleichsbehälter
- 23: Wärmetauscher
- 24: Thermostat
- 25: Arbeitsmediumzulauf
- 26: Rückschlagventil
- 27: Spaltdichtung
- 28: Kupplung
- 29: Zuführleitung
- 30: Arbeitsmediumablauf

## Patentansprüche

1. Fahrzeugkühlreislauf, insbesondere Motorkühlkreislauf,
1.1 mit einem im Kreislauf mittels einer Kühlmediumpumpe (1) umgewälzten Kühlmedium;
1.2 mit einem mittels des Kühlmediums gekühlten Fahrzeugantriebsmotor (2) und/oder sonstigen wärmeerzeugenden Aggregat;
1.3 mit einem hydrodynamischen Retarder (3), umfassend ein angetriebenes Primärschaufelrad (4) und ein Sekundärschaufelrad (5), die miteinander einen torusförmigen wahlweise mit einem Arbeitsmedium befüllbaren und von diesem entleerbaren Arbeitsraum (6) ausbilden, um Drehmoment hydrodynamisch vom Primärschaufelrad (4) auf das Sekundärschaufelrad (5) zu übertragen; wobei
1.4 das Arbeitsmedium des hydrodynamischen Retarders (3) zugleich das Kühlmedium des Kühlkreislaufes ist; und
1.5 der hydrodynamische Retarder (3) zugleich als die Kühlmediumpumpe (1) arbeitet und eine Pumpwirkung zum Umwälzen des Kühlmediums im Kühlkreislauf auf das Kühlmedium aufbringt;
**gekennzeichnet durch** die folgenden Merkmale:
1.6 dem Sekundärschaufelrad (5) ist eine Bremse (7) oder ein gegenüber dem Antrieb des Primärschaufelrads (4) gegenläufiger Antrieb derart zugeordnet, dass dieses wahlweise in einem ersten Betriebszustand - Bremsbetrieb - festsetzbar oder entgegen der Drehrichtung des Primärschaufelrads (4) antreibbar ist, um das Primärschaufelrad (4) hydrodynamisch abzubremsen und in einem zweiten Betriebszustand - Pumpbetrieb - teilweise oder vollständig freigebbar ist, so dass es mit der Drehzahl des Primärschaufelrads (4) oder mit einer vorgegebenen Drehzahldifferenz langsamer als das Primärschaufelrad (4) gemeinsam mit dem Primärschaufelrad (4) in dieselbe Richtung umläuft.

2. Fahrzeugkühlreislauf nach Anspruch 1, **dadurch gekennzeichnet, dass** das Primärschaufelrad (4) auf einer dem Arbeitsraum (6) abgewandten Seite eine Rückenbeschaufelung (8) trägt.

3. Fahrzeugkühlreislauf nach einem der Ansprüche 1 oder 2, **dadurch gekennzeichnet, dass** die Schaufel (9) der Rückenbeschaufelung (8) zwischen zwei Schaufeln (10) des Primärschaufelrades (4) angeordnet ist.

4. Fahrzeugkühlreislauf nach Anspruch 3, **dadurch gekennzeichnet, dass** einander benachbarte Schaufeln (10) des Primärschaufelrades (4) einen Arbeitsschaufelraum (11) begrenzen, und einander benachbarte Schaufeln (9) der Rückenbeschaufelung (8) einen Rückenschaufelraum (12) begrenzen, wobei Arbeitsschaufelraum (11) und Rückenschaufelraum (12) über Öffnungen (13) im Primärschaufelrad (4) in strömungsleitender Verbindung miteinander stehen.

5. Fahrzeugkühlreislauf nach Anspruch 4, **dadurch gekennzeichnet, dass** die Öffnungen (13) einen Arbeitsmediumeintritt (14) und einen Arbeitsmediumaustritt (15) bilden, so dass Arbeitsmedium aus dem Arbeitsraum (6) durch den Arbeitsmediumaustritt (15) über die Schaufeln (9) der Rückenbeschaufelung (8) und den Arbeitsmediumeintritt (14) in den Arbeitsraum (4) zurückströmt.

6. Fahrzeugkühlreislauf nach Anspruch 5, **dadurch gekennzeichnet, dass** der Arbeitsmediumaustritt (15) radial innen im Bereich der Vorderseite der Schaufel (9) in Bezug auf die Drehrichtung des Primärschaufelrades (4) gesehen im Primärschaufelrad (4) eingebracht ist, wohingegen der Arbeitsmediumeintritt (14) radial außen im Bereich der Rückseite der Schaufeln (9) in das Primärschaufelrad (4) eingebracht ist.

7. Fahrzeugkühlreislauf nach Anspruch 5 oder 6, **dadurch gekennzeichnet, dass** der Arbeitsmediumeintritt (14) und der Arbeitsmediumaustritt (15) in einem gemeinsamen Arbeitsschaufelraum (11) angeordnet sind.

8. Fahrzeugkühlreislauf nach einem der Ansprüche 1 bis 7, **dadurch gekennzeichnet, dass** das Primär- (4) und Sekundärschaufelrad (5) einen Trennspalt (16) ausbilden, durch den Arbeitsmedium aus dem Arbeitsraum (6) abführbar ist und insbesondere im radial äußeren Bereich der Schaufelräder (4, 5) Öffnungen (13, 17) vorgesehen sind, durch welche das Arbeitsmedium im Wesentlichen in Radial- oder Axialrichtung aus dem Arbeitsraum (6) abführbar ist.

9. Fahrzeugkühlreislauf nach Anspruch 8, **dadurch gekennzeichnet, dass** der Trennspalt (16) und/oder die Öffnungen (13, 17) in einem Arbeitsmediumablauf (18) münden.

10. Fahrzeugkühlreislauf nach Anspruch 8 oder 9, **dadurch gekennzeichnet, dass** die Öffnungen (17) strömungsleitend mit einem Spiralkanal (19) verbunden sind oder in einen solchen münden.

11. Fahrzeugkühlreislauf nach einem der Ansprüche 1 bis 10, **dadurch gekennzeichnet, dass** der Kreislauf derart eingerichtet ist, dass das Verhältnis des Fördervolumenstroms des Retarders (3) im Bremsbetrieb zu dem des Fördervolumenstroms im Pumpbetrieb mindestens 1,5 beträgt.

12. Fahrzeugkühlreislauf, insbesondere Motorkühlkreislauf
12.1 mit einem im Kreislauf mittels einer Kühlmediumpumpe (1) umgewälzten Kühlmedium;
12.2 mit einem mittels des Kühlmediums gekühlten Fahrzeugantriebsmotor (2) und/oder sonstigen wärmeerzeugenden Aggregats;
12.3 mit einer hydrodynamischen Kupplung (20), umfassend ein angetriebenes Primärschaufelrad (4) und ein Sekundärschaufelrad (5), die miteinander einen torusförmigen, wahlweise mit einem Arbeitsmedium befüllbaren und von diesem entleerbaren Arbeitsraum (6) ausbilden, um Drehmoment hydrodynamisch vom Primärschaufelrad (4) auf das Sekundärschaufelrad (5) zu übertragen; wobei
12.4 das Arbeitsmedium der hydrodynamischen Kupplung (20) zugleich das Kühlmedium des Kühlkreislaufes ist; und
12.5 das Sekundärschaufelrad (5) der hydrodynamischen Kupplung (20) drehfest mit der Kühlmediumpumpe verbunden ist;
**dadurch gekennzeichnet, dass**
12.6 dem Sekundärschaufelrad (5) eine Bremse (7) oder ein gegenüber dem Antrieb des Primärschaufelrads (4) gegenläufiger Antrieb derart zugeordnet ist, dass dieses wahlweise in einem ersten Betriebszustand - Bremsbetrieb
- festsetzbar oder entgegen der Drehrichtung des Primärschaufelrads (4) antreibbar ist, um das Primärschaufelrad (4) hydrodynamisch abzubremsen und in einem zweiten Betriebszustand - Pumpbetrieb - teilweise oder vollständig freigebbar ist, so dass es mit der Drehzahl des Primärschaufelrades (4) oder mit einer vorgegebenen Drehzahldifferenz langsamer als das Primärschaufelrad (4) gemeinsam mit dem Primärschaufelrad (4) in dieselbe Richtung umläuft.

## Claims

1. A vehicle cooling circuit, in particular an engine cooling circuit,
1.1 having a cooling medium circulated by a cooling medium pump (1) in the circuit;
1.2 having a vehicle drive engine (2) and/or other heat-generating assembly cooled by means of the cooling medium;
1.3 having a hydrodynamic retarder (3), comprising a driven primary blade wheel (4) and a secondary blade wheel (5), which form together a toroidal working chamber (6) which selectively can be filled with a working medium and from which said working medium can be drained, to transfer torque hydrodynamically from the primary blade wheel (4) to the secondary blade wheel (5); wherein
1.4 the working medium of the hydrodynamic retarder (3) is at the same time the cooling medium of the cooling circuit; and
1.5 the hydrodynamic retarder (3) at the same time operates as the cooling medium pump (1) and applies a pumping effect for circulating the cooling medium in the cooling circuit;
**characterised by** the following features:
1.6 a brake (7) or a counter-rotating drive to drive the primary blade wheel (4) is associated with the secondary blade wheel (5) in such a way that it selectively can be fixed in a first operating mode - brake mode - or driven opposite to the rotation direction of the primary blade wheel (4), in order to brake the primary blade wheel (4) hydrodynamically and in a second operating mode - pump mode - can be released partially or completely so that it rotates at the speed of the primary blade wheel (4) or at a specified speed difference slower than the primary blade wheel (4) together with the primary blade wheel (4) in the same direction.

2. The vehicle cooling circuit according to claim 1, **characterised in that** the primary blade wheel (4) carries a back blading (8) on a side facing away from the working chamber (6).

3. The vehicle cooling circuit according to one of the claims 1 or 2, **characterised in that** the blade (9) of the back blading (8) is arranged between two blades (10) of the primary blade wheel (4).

4. The vehicle cooling circuit according to claim 3, **characterised in that** neighbouring blades (10) of the primary blade wheel (4) form a working blade chamber (11), and neighbouring blades (9) of the back blading (8) form a back blading chamber (12), whereas the working blade chamber (11) and back blading chamber (12) are connected together in a flow-guiding manner via openings (13).

5. The vehicle cooling circuit according to claim 4, **characterised in that** the openings (13) form a working medium inlet (14) and a working medium outlet (15), so that working medium flows back from the working chamber (6) through the working medium outlet (15) via the blades (9) of the back blading (8) and via the working medium inlet (14) into the working chamber (4).

6. The vehicle cooling circuit according to claim 5, **characterised in that** the working medium outlet (15) is located in the primary blade wheel (4) radially and inwardly in the region of the front side of the blade (9) with relation to the rotation direction of the primary blade wheel (4), whereas the working medium inlet (14) is located radially and outwardly in the region of the back of the blades (9) in the primary blade wheel (4).

7. The vehicle cooling circuit according to claim 5 or 6, **characterised in that** the working medium inlet (14) and the working medium outlet (15) are arranged in a common working blade chamber (11).

8. The vehicle cooling circuit according to one of the claims 1 to 7, **characterised in that** the primary blade wheel (4) and the secondary blade wheel (6) form a separating gap (16) through which working medium can be discharged from the working chamber (6) and in particular openings (13, 17) are provided in the radially external region of the blade wheels (4, 5) through which the working medium can be discharged from the working chamber (6) essentially in the radial or axial direction.

9. The vehicle cooling circuit according to claim 8, **characterised in that** the separating gap (16) and/or the openings (13, 17) emerge in a working medium outlet (18).

10. The vehicle cooling circuit according to claim 8 or 9, **characterised in that** the openings (17) are connected to a spiral channel (19) in a flow-guiding manner or emerge in such a channel.

11. The vehicle cooling circuit according to one of the claims 1 to 10, **characterised in that** the circuit is set up in such a way that the ratio of the discharge volume flow rate of the retarder (3) in braking mode to that of the discharge volume flow rate in pumping mode is at least 1.5.

12. A vehicle cooling circuit, in particular an engine cooling circuit,
12.1 having a cooling medium circulated by a cooling medium pump (1) in the circuit;
12.2 having a vehicle drive engine (2) and/or other heat-generating assembly cooled by means of the cooling medium;
12.3 having a hydrodynamic coupling (20), comprising a driven primary blade wheel (4) and a secondary blade wheel (5), which form together a toroidal working chamber (6) which selectively can be filled with a working medium and from which said working medium can be drained, to transfer torque hydrodynamically from the primary blade wheel (4) to the secondary blade wheel (5); wherein
12.4 the working medium of the hydrodynamic retarder (20) is at the same time the cooling medium of the cooling circuit; and
12.5 the secondary blade wheel (5) of the hydrodynamic coupling (20) is connected in a torque-proof manner to the cooling medium pump; **characterised in that**
12.6 a brake (7) or a counter-rotating drive to drive the primary blade wheel (4) is associated with the secondary blade wheel (5) in such a way that it selectively can be fixed in a first operating mode - brake mode - or driven opposite to the rotation direction of the primary blade wheel (4), in order to brake the primary blade wheel (4) hydrodynamically and in a second operating mode - pump mode - can be released partially or completely so that it rotates at the speed of the primary blade wheel (4) or at a specified speed difference slower than the primary blade wheel (4) together with the primary blade wheel (4) in the same direction.

## Revendications

1. Circuit de refroidissement pour véhicule à moteur, en particulier circuit de refroidissement d'un moteur,
1.1 comprenant un fluide de refroidissement circulant dans le circuit au moyen d'une pompe à fluide de refroidissement (1);
1.2 un moteur d'entraînement de véhicule (2) et/ou un autre groupe thermique, refroidi au moyen du fluide de refroidissement;
1.3 un retardateur hydrodynamique (3), comportant une roue à aubes primaire entraînée (4) et une roue à aubes secondaire (5), qui forment ensemble un espace de travail (6) toroïdal pouvant être rempli sélectivement d'un fluide de travail et pouvant être vidé de celui-ci, pour transmettre un couple de rotation de manière hydrodynamique de la roue à aubes primaire (4) à la roue à aubes secondaire (5); dans lequel
1.4 le fluide de travail du retardateur hydrodynamique (3) est en même temps le fluide de refroidissement du circuit de refroidissement; et
1.5 le retardateur hydrodynamique (3) fonctionne en même temps comme pompe à fluide de refroidissement (1) et confère au fluide de refroidissement un effet de pompage pour faire circuler le fluide de refroidissement dans le circuit de refroidissement,
présentant les caractéristiques suivantes:
1.6 un frein (7) ou un entraînement contrarotatif par rapport à l'entraînement de la roue à aubes primaire (4) est associé à la roue à aubes secondaire (5), de sorte que ladite roue à aubes secondaire puisse sélectivement être immobilisée dans un premier mode d'exploitation - mode freinage - ou bien être entraînée à l'encontre du sens de rotation de la roue à aubes primaire (4), pour freiner de manière hydrodynamique la roue à aubes primaire (4) et pour qu'elle puisse être libérée partiellement ou complètement dans un second mode d'exploitation - mode pompage -, pour qu'elle tourne à la vitesse de rotation de la roue à aubes primaire (4) ou bien avec une différence de vitesse de rotation prédéterminée, plus lentement que la roue à aubes primaire (4), dans le même sens que la roue à aubes primaire (4).

2. Circuit de refroidissement pour véhicule à moteur selon la revendication 1, **caractérisé en ce que** la roue à aubes primaire (4) porte un aubage arrière (8) sur un côté opposé à l'espace de travail (6).

3. Circuit de refroidissement pour véhicule à moteur selon l'une des revendications 1 ou 2, **caractérisé en ce que** l'aube (9) de l'aubage arrière (8) est disposé entre deux aubes (10) de la roue à aubes primaire (4).

4. Circuit de refroidissement pour véhicule à moteur selon la revendication 3, **caractérisé en ce que** des aubes adjacentes (10) de la roue à aubes primaire (4) délimitent un espace à aubes de travail (11), et des aubes adjacentes (9) de l'aubage arrière (8) délimitent un espace à aubes arrière (12), tandis que l'espace à aubes de travail (11) et l'espace à aubes arrière (12) forment une liaison avec guidage d'écoulement par le biais d'ouvertures (13) dans la roue à aubes primaire (4).

5. Circuit de refroidissement pour véhicule à moteur selon la revendication 4, **caractérisé en ce que** les ouvertures (13) constituent une entrée de fluide de travail (14) et une sortie de fluide de travail (15) de sorte que le fluide de travail s'écoule de l'espace de travail (6) à travers la sortie de fluide de travail (15) par le biais des aubes (9) de l'aubage arrière (8) et à travers l'entrée de fluide de travail (14) pour retourner à l'espace de travail (4).

6. Circuit de refroidissement pour véhicule à moteur selon la revendication 5, **caractérisé en ce que** la sortie de fluide de travail (15) est située dans la roue à aubes primaire (4) radialement à l'intérieur dans la zone de la face avant de l'aube (9) par rapport au sens de rotation de la roue à aubes primaire (4), alors que l'entrée de fluide de travail (14) est située dans la roue à aubes primaire (4) radialement à l'extérieur dans la zone de la face arrière des aubes (9).

7. Circuit de refroidissement pour véhicule à moteur selon la revendication 5 on 6, **caractérisé en ce que** l'entrée de fluide de travail (14) et la sortie de fluide de travail (15) sont disposées dans un espace à aubes de travail commun (11).

8. Circuit de refroidissement pour véhicule à moteur selon l'une des revendications 1 à 7, **caractérisé en ce que** la roue à aubes primaire (4) et la roue à aubes secondaire (5) forment une fente de séparation (16) à travers laquelle du fluide de travail peut être évacué de l'espace de travail (6) et en particulier des ouvertures (13, 17) sont prévues dans la zone radialement externe des roues à aubes (4, 5), à travers lesquelles le fluide de travail peut être évacué de l'espace de travail (6) plus ou moins dans l'axe radial ou axial.

9. Circuit de refroidissement pour véhicule à moteur selon la revendication 8, **caractérisé en ce que** la fente de séparation (16) et/ou les ouvertures (13, 17) émergent dans une sortie d'évacuation de fluide de travail (18).

10. Circuit de refroidissement pour véhicule à moteur selon la revendication 8 ou 9, **caractérisé en ce que** les ouvertures (17) sont reliées à un canal spiral (19) en guidant l'écoulement ou bien émergent dans celui-ci.

11. Circuit de refroidissement pour véhicule à moteur selon l'une des revendications 1 à 10, **caractérisée en ce que** le circuit est installé de telle sorte que le rapport du débit de volume convoyé du retardateur (3) en mode freinage à celui du débit de volume convoyé en mode pompage est au moins de 1,5.

12. Circuit de refroidissement pour véhicule à moteur, en particulier circuit de refroidissement d'un moteur,
12.1 comprenant un fluide de refroidissement circulant dans le circuit au moyen d'une pompe à fluide de refroidissement (1);
12.2 un moteur d'entraînement de véhicule (2) et/ou un autre groupe thermique, refroidi au moyen du fluide de refroidissement;
12.3 pourvu d'un accouplement hydrodynamique (20), comportant une roue à aubes primaire entraînée (4) et une roue à aubes secondaire (5), qui forment ensemble un espace de travail (6) toroïdal pouvant être rempli sélectivement d'un fluide de travail et pouvant être vidé de celui-ci, pour transmettre un couple de rotation de manière hydrodynamique de la roue à aubes primaire (4) à la roue à aubes secondaire (5); dans lequel
12.4 le fluide de travail du retardateur hydrodynamique (20) est en même temps le fluide de refroidissement du circuit de refroidissement; et
12.5 la roue à aubes secondaire (5) de l'accouplement hydrodynamique (20) est relié à la pompe à fluide de refroidissement avec blocage en rotation; **caractérisé en ce que**
12.6 un frein (7) ou un entraînement contrarotatif par rapport à l'entraînement de la roue à aubes primaire (4) est associé à la roue à aubes secondaire (5) de telle sorte que ladite roue à aubes secondaire puisse sélectivement être immobilisée dans un premier mode d'exploitation - mode freinage - ou bien être entraînée à l'encontre du sens de rotation de la roue à aubes primaire (4), pour freiner de manière hydrodynamique la roue à aubes primaire (4) et pour qu'elle puisse être libérée partiellement ou complètement dans un second mode d'exploitation - mode pompage -, pour qu'elle tourne à la vitesse de rotation de la roue à aubes primaire (4) ou bien avec une différence de vitesse de rotation prédéterminée, plus lentement que la roue à aubes primaire (4), dans le même sens que la roue à aubes primaire (4).
